# FASCICULE DE BREVET EUROPEEN

(11) **EP 4 315 462 B1**
(45) Date de publication et mention de la délivrance du brevet: **11.03.2026**
(21) Numéro de dépôt: 22735534.4
(22) Date de dépôt: 26.04.2022
(51) Int. Cl.: H01M 8/0206, H01M 8/0228, H01M 8/0297, C25B 1/042, C25B 9/65, C25B 9/75, C25B 9/77, H01M 8/0273, H01M 8/0286, H01M 8/12, C25B 15/08

(54) **PROCÉDÉ DE RÉALISATION D'UN EMPILEMENT À OXYDES SOLIDES DE TYPE SOEC/SOFC ET EMPILEMENT ASSOCIÉ**
VERFAHREN ZUR HERSTELLUNG EINES STAPELS MIT FESTOXIDEN VOM TYP SOEC/SOFC UND DAMIT GEBUNDENDEN STAPEL
METHOD OF MANUFACTURING A STACK OF SOLID OXIDES OF THE TYPE SOEC/SOFC AND RELATED STACK

(30) Priorité: 04.05.2021 FR 2104688
(43) Date de publication de la demande: 07.02.2024
(73) Titulaire: Commissariat à l'Energie Atomique et aux Energies Alternatives, 75015 Paris (FR)
(72) Inventeur: DI IORIO, Stéphane, 38054 GRENOBLE CEDEX 09 (FR); ORESIC, Bruno, 38054 GRENOBLE CEDEX 09 (FR)
(74) Mandataire: Santarelli
(86) Numéro de dépôt international: PCT/FR2022/050789
(87) Numéro de publication internationale: WO 2022/234214

(56) Documents cités:
- EP-A1- 1 786 056
- JP-A- 2010 073 631
- STOEVER D ET AL: "RECENT DEVELOPMENTS IN ANODE SUPPORTED THIN FILM SOFC AT RESEARCH CENTRE JUELICH", PROCEEDINGS - ELECTROCHEMICAL SOCIETY, ELECTROCHEMICAL SOCIETY, PENNINGTON, NJ, US, vol. 99-19, 1 January 1999 (1999-01-01), pages 812 - 821, XP009060695, ISSN: 0161-6374
- DILLIG MARIUS ET AL: "Thermal contact resistance in solid oxide fuel cell stacks", JOURNAL OF POWER SOURCES, ELSEVIER, AMSTERDAM, NL, vol. 300, 24 September 2015 (2015-09-24), pages 69 - 76, XP029346885, ISSN: 0378-7753, DOI: 10.1016/J.JPOWSOUR.2015.09.031

## Description

### DOMAINE TECHNIQUE

La présente invention se rapporte au domaine général de l'électrolyse de l'eau à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de l'eau à haute température (EHT) avec le dioxyde de carbone (CO₂).

Plus précisément, l'invention se rapporte au domaine des électrolyseurs à oxydes solides à haute température, désignés habituellement par l'acronyme SOEC (pour « Solide Oxide Electrolyzer Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un procédé de réalisation ou d'assemblage d'un empilement à oxydes solides de type SOEC/SOFC comprenant une étape de soudure par points sur une face de chaque interconnecteur de l'empilement pour la fixation d'une couche de contact, ainsi qu'un empilement associé.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (O₂), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de l'eau. Toutefois, ce fonctionnement est applicable à l'électrolyse du dioxyde de carbone (CO₂), voire encore de la co-électrolyse de l'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de l'eau à haute température (EHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion souvent en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Ainsi par exemple, dans un empilement de type SOFC, il est connu de prévoir une couche de contact sous forme de grille en Nickel entre l'anode de chaque cellule électrochimique et l'interconnecteur adjacent. L'article *"*Recent developments in anode supported thin fim SOFC at research centre lulich" (XP009060695) publié par Stover et.al*.,* et l'article « Thermal contact resistance in solid oxide fuel cell stocks » publié par Dilling et al. divulguent de tels empilements. La grille en Nickel peut être soudée par points sur les nervures de contact de l'interconnecteur. JP2010-073631 enseigne aussi la présence d'une grille de Nickel soudée par points côté hydrogène dans un empilement du type SOFC.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, combinant ainsi la production de chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

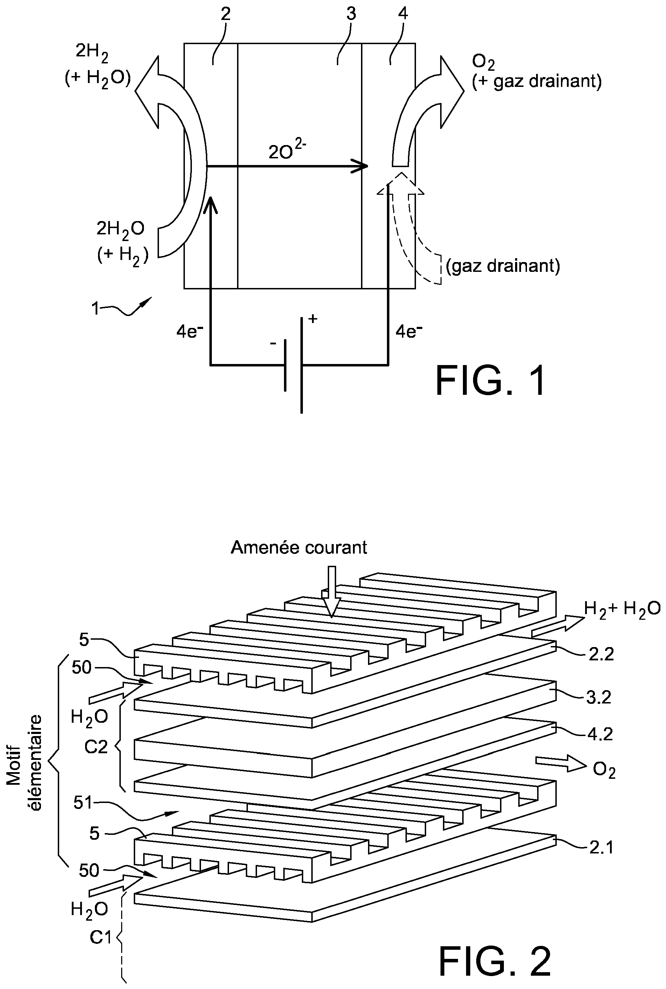

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et des alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est typiquement un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

Pour parvenir à augmenter l'efficacité de production et obtenir une bonne homogénéité de fonctionnement des empilements à oxydes solides de type SOEC/SOFC fonctionnant à haute température, le rôle des interconnecteurs est essentiel, en particulier pour obtenir de bons contacts électriques entre les différentes parties des empilements et permettre également la bonne distribution des gaz au sein des cellules électrochimiques. Les interconnecteurs peuvent être métalliques et composés de trois plaques fines, ou encore appelées tôles ou feuillards, soudées entre elles, comme décrit dans la demande de brevet français FR 3 024 985 A1.

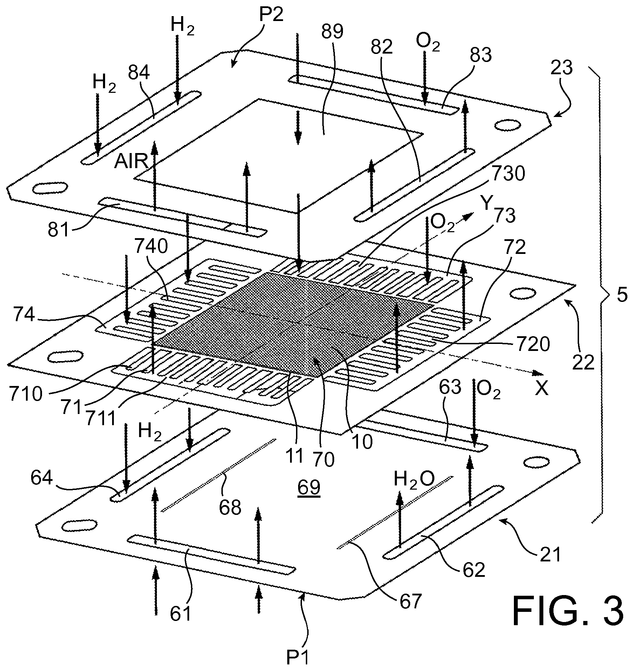

La figure 3 représente ainsi, selon une vue éclatée, un exemple d'interconnecteur 5 formé par l'assemblage de trois tôles 21 à 23 fines métalliques assemblées et stratifiées.

Les trois tôles 21, 22, 23 sont allongées selon deux axes de symétrie X et Y orthogonaux entre eux, les tôles étant stratifiées et assemblées entre elles par soudure. Une tôle centrale 22 est intercalée entre une première tôle d'extrémité 21 et une deuxième tôle d'extrémité 23.

La tôle centrale 22 comporte ici une partie centrale 70 emboutie définissant des éléments en relief 10, ou emboutis. En variante, la tôle centrale 22, et donc la partie centrale 70, peuvent être lisses. De plus, elle est percée à la périphérie de sa partie centrale 70, de quatre lumières 71, 72, 73, 74. Par « lumière », on entend un trou débouchant de part et d'autre d'une tôle métallique.

L'une des tôles planes d'extrémité 21 comporte une partie centrale plane 69 et est percée, à la périphérie de sa partie centrale 69, de quatre lumières 61, 62, 63, 64. La première tôle d'extrémité 21 comporte en outre deux fentes 67, 68, lumières agencées symétriquement de part et d'autre de l'axe Y. Elles sont allongées sur une longueur correspondant sensiblement à la longueur de la partie centrale 69 selon l'axe Y.

L'autre des tôles planes d'extrémité 23 comporte une partie centrale 89 évidée et percée, à la périphérie de sa partie centrale 89, de quatre lumières 81, 82, 83, 84.

Les lumières 61, 71, 81, 63, 73, 83 de chaque tôle sont allongées sur une longueur correspondant sensiblement à la longueur de la partie centrale 69, 70, 89 selon l'axe X, tandis que les lumières 62, 72, 82, 64, 74, 84 de chaque tôle sont allongées sur une longueur correspondant sensiblement à la longueur de la partie centrale 69, 70, 89 selon l'axe Y.

Les lumières 71 à 74 de la tôle centrale 22 sont élargies respectivement par rapport aux lumières 61, 81, 62, 82, 63, 83, 64, 84, et elles comportent dans leur partie élargie des languettes de tôle 710, 720, 730, 740 espacées les unes des autres en formant un peigne. Chacune des fentes 711, définie entre le bord de la lumière élargie 71 et une languette 710 ou entre deux languettes successives 710 débouche sur les canaux 11 définis par les reliefs 10 ou emboutis. Il en va de même pour les fentes réalisées du côté des lumières 72, 73, 74.

Les tôles 21, 22, 23 sont typiquement en acier ferritique avec de l'ordre de 20 % de chrome, de préférence en CROFER^{®} 22 (APU ou H) ou K41 (ASI 441) ou le FT18TNb, à base Nickel de type Inconel^{®} 600 ou Haynes^{®} dans des épaisseurs typiquement comprises entre 0,1 et 1 mm.

Ces interconnecteurs peuvent être en outre comme décrit dans la demande de brevet français FR 2 996 065 A1. Dans cette demande, l'interconnecteur correspond à un composant à substrat en alliage métallique, dont l'élément de base est du Fer (Fe) ou du Nickel (Ni), avec une des faces planes principales revêtue d'une couche épaisse céramique, rainurée en délimitant des canaux adaptés pour la distribution et/ou la collecte de gaz, tels que vapeur d'eau H₂O, H₂ ; Air, et l'autre des faces planes principales revêtue d'une couche épaisse métallique, rainurée en délimitant des canaux adaptés pour la distribution et/ou la collecte de gaz, tels que vapeur d'eau H₂O, H₂ ; O₂, gaz drainant. En particulier, une couche de contact épaisse en céramique à base de manganite de lanthane dopée strontium peut être prévue du côté de l'électrode à oxygène (anode en EHT, cathode pour une pile SOFC), sur la tôle d'extrémité 23, laquelle est thermopressée selon le principe de FR 2 996 065 A1, et une couche de contact épaisse métallique à base de nickel peut être prévue du côté de l'électrode à hydrogène (cathode en EHT, anode pour une pile SOFC), sur la tôle d'extrémité 21, et se présenter notamment sous la forme d'une grille de Nickel.

Par « couche épaisse », on entend une couche dont l'épaisseur est supérieure à celle d'une couche obtenue par une technologie dite « couche mince », typiquement une épaisseur comprise entre 2 et 15 µm. On obtient ainsi de bonnes performances avec une bonne homogénéité dans les empilements à oxydes solides de type SOFC/SOEC avec de faibles coûts de réalisation.

La fabrication et l'assemblage du stack, à savoir l'ensemble des cellules électrochimiques 1 et des interconnecteurs 5, se fait de façon particulière tenant compte de la géométrie des plaques et des choix techniques de conception réalisés. Un empilement des couches successives est réalisé avec notamment la séquence suivante : interconnecteur, puis couche de contact céramique, puis cellule électrochimique, puis couche de contact métallique, puis interconnecteur, etc.

Aussi, des besoins existent encore pour optimiser l'empilement de telles couches successives pour former le stack, et notamment pour obtenir un ensemble solidaire de sorte à éviter toute mobilité lors des phases d'assemblage et d'empilement permettant la fabrication du stack.

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'un ensemble interconnecteur/couche de contact/cellule électrochimique pour empilements à oxydes solides de type SOEC/SOFC qui soit stable et solidaire pour faciliter la fabrication du stack.

L'invention a ainsi pour objet, selon l'un de ses aspects, un procédé de réalisation d'un empilement à oxydes solides de type SOEC/SOFC fonctionnant à haute température, comportant une pluralité de cellules électrochimiques formées chacune d'une cathode, d'une anode et d'un électrolyte intercalé entre la cathode et l'anode, et une pluralité d'interconnecteurs métalliques agencés chacun entre deux cellules électrochimiques adjacentes,
chaque interconnecteur présentant deux faces planes principales, une première face des deux faces planes principales comprenant une couche de revêtement métallique sous forme de grille formant une couche de contact avec une cellule électrochimique,
le procédé comportant l'étape de soudure par points de la couche de revêtement métallique sur la première face de l'interconnecteur pour en permettre la fixation,
et l'étape de dépôt d'une colle en périphérie de la couche de revêtement (GN), hors zone active et à distance des alimentations en gaz, destinée à venir fixer la cellule électrochimique (1), la colle comprenant entre 5 % et 50 % en masse de poly-butyral vinylique (PVB), entre 5 % et 50 % en masse de terpinéol et entre 5 % et 95 % en masse d'éthanol.

Le procédé de réalisation selon l'invention peut en outre comporter l'une ou plusieurs des caractéristiques suivantes prises isolément ou suivant toutes combinaisons techniques possibles.

Le matériau métallique de la couche de revêtement peut être choisi parmi le Nickel et ses alliages, la couche de revêtement étant notamment sous la forme d'une grille de Nickel, ou les alliages chromino-formeurs dont l'élément de base est le Fer.

En outre, plusieurs points de soudure peuvent être réalisés, notamment au moins quatre, voire au moins huit, en étant répartis régulièrement en périphérie de la couche de revêtement, étant notamment présents aux angles de la couche de revêtement.

Par ailleurs, le procédé de réalisation peut comporter l'étape de dépôt d'une couche en verre sur la couche de revêtement avant l'étape de dépôy de colle.

De plus, chaque interconnecteur présentant deux faces planes principales, une deuxième face des faces planes principales peut comprendre une couche de revêtement épaisse en céramique, formant une couche de contact avec une cellule électrochimique, le matériau en céramique étant notamment choisi parmi un lanthanite dopé au strontium de formule La₁₋ₓSrₓMO₃ avec M (métaux de transition) = Nickel, Fer, Cobalt, Manganèse, Chrome, seul ou en mélange, ou des matériaux de structure lamellaire tels que les nickelâtes de lanthanide de formule Ln₂NiO₄ (Ln = Lanthane, Néodyme, Praséodyme), ou un autre oxyde pérovskite conducteur électrique.

En outre, chaque interconnecteur peut être formé par l'assemblage d'au moins trois plaques allongées selon un premier axe de symétrie et un deuxième axe de symétrie orthogonaux entre eux, une plaque centrale étant intercalée entre une première plaque d'extrémité et une deuxième plaque d'extrémité.

Par ailleurs, l'invention a encore pour objet, selon un autre de ses aspects, un empilement à oxydes solides de type SOEC/SOFC fonctionnant à haute température, obtenu par le biais d'un procédé de réalisation tel que défini précédemment, comportant une pluralité de cellules électrochimiques formées chacune d'une cathode, d'une anode et d'un électrolyte intercalé entre la cathode et l'anode, et une pluralité d'interconnecteurs métalliques agencés chacun entre deux cellules électrochimiques adjacentes.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
La figure 1 est une vue schématique montrant le principe de fonctionnement d'un électrolyseur à oxydes solides à haute température (SOEC),
La figure 2 est une vue schématique éclatée d'une partie d'un électrolyseur à oxydes solides à haute température (SOEC) comprenant des interconnecteurs selon l'art antérieur,
La figure 3 est une vue éclatée d'un interconnecteur pour empilement à oxydes solides de type SOEC/SOFC haute température, correspondant à l'assemblage de trois tôles ou plaques fines,
La figure 4 est une vue partielle de face d'une tôle d'interconnecteur pour empilement à oxydes solides de type SOEC/SOFC haute température illustrant l'étape de soudure par points du procédé de réalisation conforme à l'invention,
La figure 5 illustre sous forme graphique l'analyse thermogravimétrique (ATG) de la colle du procédé de réalisation conforme à l'invention sous différentes atmosphères,
Les figures 7 et 8 sont deux vues partielles de face de la tôle d'interconnecteur de la figure 4 illustrant l'étape de dépôt de colle du procédé de réalisation conforme à l'invention,
La figure 8 est une vue partielle de face de la tôle de l'interconnecteur de la figure 4 illustrant l'étape de collage de la cellule électrochimique après dépôt de la colle illustrée aux Figures 6 et 7, et
La figure 9 représente, en perspective et par observation du dessus, un ensemble comprenant un empilement à oxydes solides de type SOEC/SOFC avec un empilement de cellules électrochimiques et d'interconnecteurs obtenu par le procédé de réalisation conforme à l'invention, et un système de serrage de l'empilement.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 3 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

La figure 3 décrite précédemment est relative à un interconnecteur 5 formé par l'assemblage de trois tôles 21 à 23 fines métalliques.

Le procédé de réalisation conforme à l'invention va être décrit en référence aux figures 4 à 8, les figures 4 et 6 à 8 représentant partiellement la tôle 21 de l'interconnecteur 5 de la figure 3. Aussi, les éléments déjà décrits ne le seront pas de nouveau.

Il faut noter que l'interconnecteur 5 peut comporter un substrat en alliage métallique, notamment de type chromino-formeur dont l'élément de base est du Fer (Fe) ou du Nickel (Ni), présentant deux faces planes principales P1 et P2, comme décrit dans la demande de brevet français FR 2 996 065 A1.

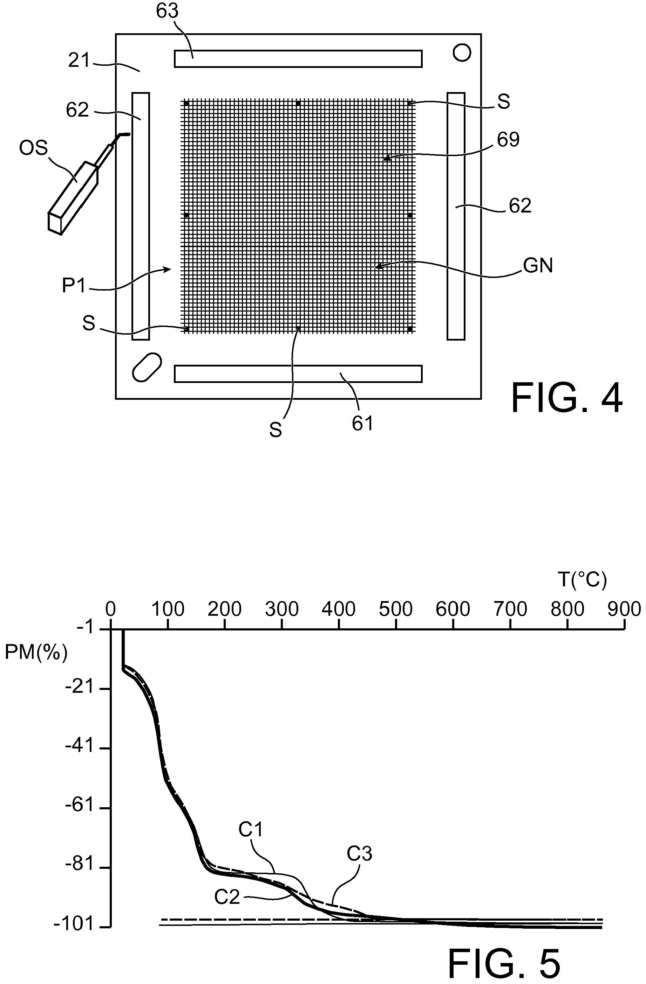

Ainsi, comme visible sur la figure 3, l'interconnecteur 5 présente deux faces planes principales P1 et P2. La première face plane principale P1 est destinée à être recouverte par une couche de revêtement métallique GN, visible sur la figure 4, formant une couche de contact avec une cellule électrochimique 1, et prévue notamment du côté de l'électrode à hydrogène. Le matériau de cette couche de revêtement métallique GN est préférentiellement choisi parmi le Nickel et ses alliages ou les alliages chromino-formeurs dont l'élément de base est le Fer Fe. En particulier, cette couche de revêtement métallique GN est sous la forme d'une grille de Nickel, comme visible sur les figures 4, 6 et 7.

Le procédé de réalisation conforme à l'invention vise à permettre un assemblage optimal entre l'interconnecteur 5 et la cellule électrochimique 1, et en particulier entre la tôle d'extrémité 21 et la grille de Nickel GN.

Ainsi, le procédé comporte l'étape de soudure par points S de la couche de revêtement métallique GN sur la première face P1 de l'interconnecteur 5 pour en permettre la fixation. Comme visible sur la figure 4, cette soudure est réalisée à l'aide d'un outil à soudure OS, notamment un dispositif de soudure par point.

La grille de Nickel GN est positionnée sur la partie centrale 69 de la tôle d'extrémité 21, dont les lumières 62 et 63 sont visibles sur la figure 4, et des points de soudure S sont réalisés tout autour de la périphérie de la grille de Nickel GN pour en permettre la fixation à la première face plane principale P1.

En particulier ici, huit points de soudure S sont réalisés dans la zone périphérique de la grille de Nickel GN, à savoir quatre points de soudure S aux quatre coins de la grille de Nickel GN et quatre points sur les milieux de chaque côté de la grille de Nickel GN. Ces points de soudure S sont espacés régulièrement en périphérie de la grille de Nickel GN. Il est possible d'avoir un nombre plus important de points de soudure S mais cela rallonge le délai de cette étape du procédé de réalisation.

Avantageusement, cette soudure par points permet de maintenir en place la grille de Nickel GN sans la déformer et sans apporter d'élément d'apport de sorte à limiter les éventuelles pollutions, à l'inverse des solutions de l'art antérieur ne prévoyant aucun moyen de fixation de la grille de Nickel GN à la tôle d'extrémité 21.

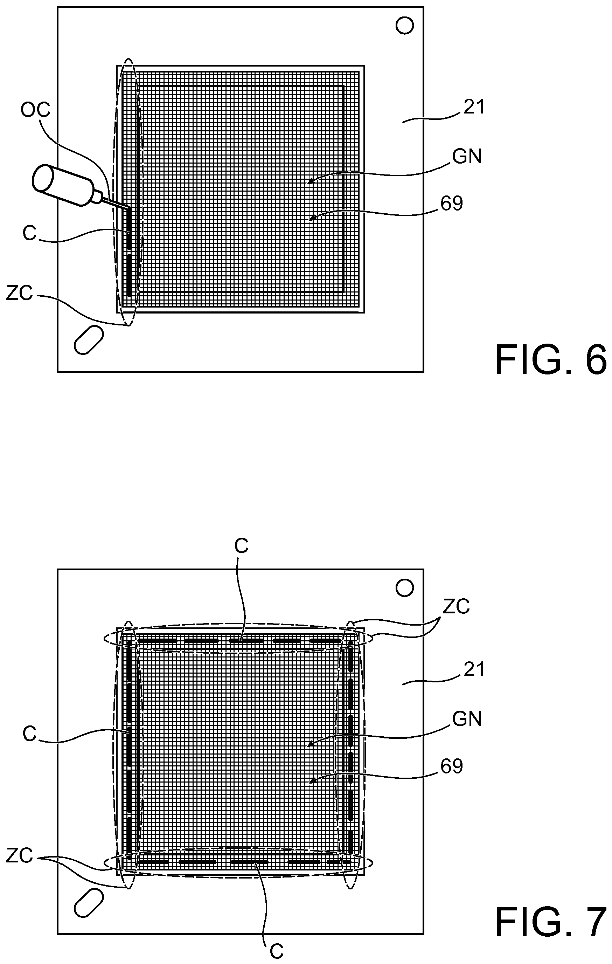

Par ailleurs, comme illustré par les figures 6 et 7, le procédé de réalisation conforme à l'invention comporte une étape de dépôt d'une colle C sur la grille de Nickel GN pour la préparer à recevoir la cellule électrochimique 1 et à permettre une fixation optimale de la cellule électrochimique 1 sur l'interconnecteur 5 par le biais de la couche de contact formée par la grille de Nickel GN.

La colle utilisée C, ou adhésif, comporte une composition bien précise pour permettre une fixation optimisée sur la grille de Nickel GN et pour ne pas laisser de résidu lors du passage à haute température.

En particulier, la colle C comporte entre 5 % et 50 % en masse de poly-butyral vinylique (PVB), entre 5 % et 50 % en masse de terpinéol et entre 5 % et 95 % en masse d'éthanol. Préférentiellement, la colle C comporte 17 % en masse de poly-butyral vinylique (PVB), 28 % en masse de terpinéol et entre 55 % en masse d'éthanol. La composition de la colle C peut ainsi varier mais la viscosité de la colle C évoluera en fonction des ratios de mélange.

L'avantage d'une telle étape de collage est d'éviter le mouvement de la cellule électrochimique 1 pendant les phases suivantes de réalisation de l'empilement, ou d'assemblage, mais également de remettre à plat la cellule électrochimique 1 pour le cas fréquent où elle est courbée. Par ailleurs, la composition spécifique de la colle C proposée permet d'éviter les inconvénients d'une colle classique qui laisserait des résidus après chauffage, créant ainsi des pollutions nuisibles à la durabilité de l'empilement SOFC/SOEC.

La figure 7 est un graphique illustrant l'évolution de la perte de masse PM, exprimée en pourcentage (%), en fonction de la température T, exprimée en degrés Celsius (°C). Il s'agit ainsi d'une analyse thermogravimétrique (ATG) de la colle C. Trois courbes C1, C2 et C3 sont représentées, correspondant à trois atmosphères différentes. On constate ainsi que, quelle que soit l'atmosphère, aucun résidu massique n'est obtenu au-delà de 500°C. Ainsi, la colle C de composition spécifique utilisée permet l'absence de résidu après chauffage.

De façon avantageuse, la colle C est déposée en périphérie de la grille de Nickel GN, hors zone active et à distance des alimentations en gaz. Comme visible sur les figures 6 et 7, la colle C est ainsi disposée, par le biais d'un outil de dépôt de colle OC, dans des zones périphériques de dépôt de colle ZC afin d'éviter de boucher toute circulation de gaz.

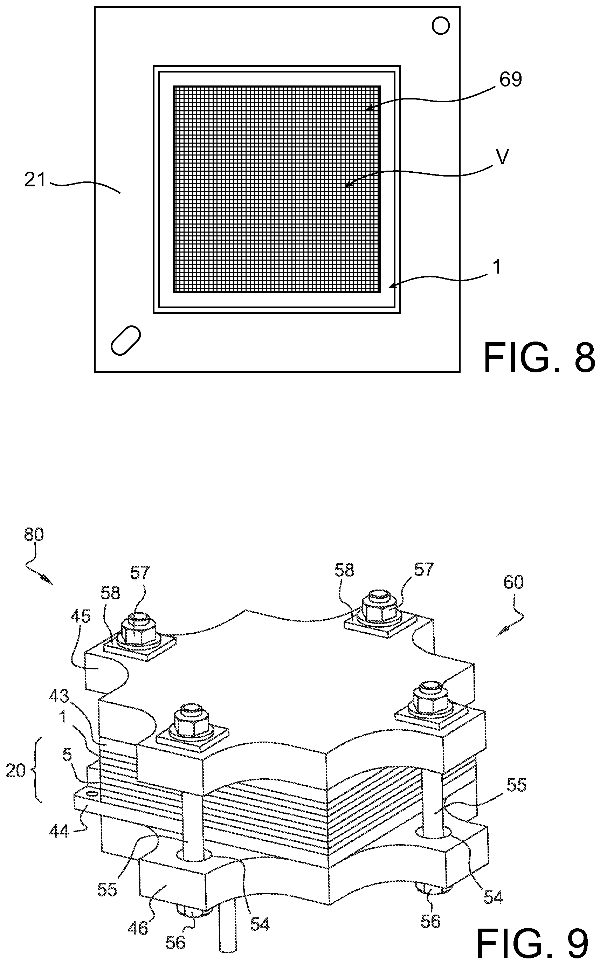

Une fois la colle C déposée, la cellule électrochimique 1 est mise en place, comme illustré sur la figure 8, et une charge est positionnée pendant quelques heures de sorte que la colle C puisse sécher et afin de maintenir la cellule électrochimique 1 même si elle était déformée initialement.

Toutefois, au préalable du dépôt de la colle C, le procédé de réalisation conforme à l'invention peut comprendre l'étape de dépôt d'une couche en verre V, visible sur la figure 8, sur la grille de Nickel GN. Ce dépôt de verre V permet d'augmenter la distribution fluidique, comme décrit dans la demande de brevet français FR 3 056 337 A1. De plus, réaliser le collage à la suite du dépôt de verre V permet d'avoir une couche en verre V qui soit encore plus souple car pas totalement sèche.

Il est à noter également que, comme visible sur la figure 3, l'interconnecteur 5 présente une deuxième face P2 qui comprend une couche de revêtement épaisse en céramique, prévue notamment du côté de l'électrode à oxygène, formant une couche de contact avec une cellule électrochimique 1. Le matériau en céramique peut être choisi parmi un lanthanite dopé au strontium de formule La₁₋ₓSrₓMO₃ avec M (métaux de transition) = Nickel (Ni), Fer (Fe), Cobalt (Co), Manganèse (Mn), Chrome(Cr), seul ou en mélange, ou des matériaux de structure lamellaire tels que les nickelâtes de lanthanide de formule Ln₂NiO₄ (Ln = Lanthane (La), Néodyme (Nd), Praséodyme (Pr)), ou un autre oxyde pérovskite conducteur électrique.

Les différentes étapes du procédé de réalisation conforme à l'invention sont répétées pour tous les interconnecteurs 5 et les cellules électrochimiques 1 de sorte à obtenir un empilement 20 à oxydes solides de type SOEC/SOFC fonctionnant à haute température.

La figure 9 représente un tel empilement 20 à oxydes solides de type SOEC/SOFC fonctionnant à haute température conforme à l'invention.

Plus précisément, la figure 9 montre un ensemble 80 comprenant l'empilement 20 à oxydes solides de type SOEC/SOFC et un système de serrage 60.

Cet ensemble 80 présente une structure semblable à celle de l'ensemble décrit dans la demande de brevet français FR 3 045 215 A1.

L'empilement 20 comporte une pluralité de cellules électrochimiques 1 formées chacune d'une cathode, d'une anode et d'un électrolyte intercalé entre la cathode et l'anode, et une pluralité d'interconnecteurs 5 métalliques agencés chacun entre deux cellules électrochimiques 1 adjacentes. Cet ensemble de cellules électrochimiques 1 et d'interconnecteurs 5 est désigné par « stack », et est obtenu par le procédé de réalisation conforme à l'invention, décrit précédemment.

De plus, l'empilement 20 comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 1 et la pluralité d'interconnecteurs 5 sont enserrées, soit entre lesquelles se trouve le stack.

Par ailleurs, l'ensemble 80 comporte aussi un système de serrage 60 de l'empilement 20 à oxydes solides de type SOEC/SOFC, comportant une plaque de serrage supérieure 45 et une plaque de serrage inférieure 46, entre lesquelles l'empilement 20 à oxydes solides de type SOEC/SOFC est enserré.

Chaque plaque de serrage 45, 46 du système de serrage 60 comporte quatre orifices de serrage 54. De plus, le système de serrage 60 comporte en outre quatre tiges de serrage 55, ou tirants, s'étendant au travers d'un orifice de serrage 54 de la plaque de serrage supérieure 45 et au travers d'un orifice de serrage 54 correspondant de la plaque de serrage inférieure 46 pour permettre l'assemblage entre elles des plaques de serrage supérieure 45 et inférieure 46. Le système de serrage 60 comporte de plus des moyens de serrage 56, 57, 58 au niveau de chaque orifice de serrage 54 des plaques de serrage supérieure 45 et inférieure 46 coopérant avec les tiges de serrage 55 pour permettre l'assemblage entre elles des plaques de serrage supérieure 45 et inférieure 46. Plus précisément, les moyens de serrage comportent, au niveau de chaque orifice de serrage 54 de la plaque de serrage supérieure 45, un premier écrou de serrage 56 coopérant avec la tige de serrage 55 correspondante insérée au travers de l'orifice de serrage 54. De plus, les moyens de serrage comportent, au niveau de chaque orifice de serrage 54 de la plaque de serrage inférieure 46, un deuxième écrou de serrage 57 associé à une rondelle de serrage 58, ceux-ci coopérant avec la tige de serrage 55 correspondante insérée au travers de l'orifice de serrage 54. La rondelle de serrage 58 est située entre le deuxième écrou de serrage 57 et la plaque de serrage inférieure 46.

Bien entendu, l'invention n'est pas limitée aux exemples de réalisation qui viennent d'être décrits. Diverses modifications peuvent y être apportées par l'homme du métier.

## Revendications

1. Procédé de réalisation d'un empilement (20) à oxydes solides de type SOEC/SOFC fonctionnant à haute température, comportant une pluralité de cellules électrochimiques (1) formées chacune d'une cathode, d'une anode et d'un électrolyte intercalé entre la cathode et l'anode, et une pluralité d'interconnecteurs (5) métalliques agencés chacun entre deux cellules électrochimiques (1) adjacentes,
chaque interconnecteur (5) présentant deux faces planes principales, une première face (P1) des deux faces planes principales comprenant une couche de revêtement métallique (GN) sous forme de grille formant une couche de contact avec une cellule électrochimique (1),
le procédé comportant l'étape de soudure par points (S) de la couche de revêtement métallique (GN) sur la première face (P1) de l'interconnecteur (5) pour en permettre la fixation,
et l'étape de dépôt d'une colle en périphérie de la couche de revêtement (GN), hors zone active et à distance des alimentations en gaz, destinée à venir fixer la cellule électrochimique (1), la colle comprenant entre 5 % et 50 % en masse de poly-butyral vinylique (PVB), entre 5 % et 50 % en masse de terpinéol et entre 5 % et 95 % en masse d'éthanol.

2. Procédé selon la revendication 1, **caractérisé en ce que** le matériau métallique de la couche de revêtement (GN) est choisi parmi le Nickel (Ni) et ses alliages, la couche de revêtement étant notamment sous la forme d'une grille de Nickel (GN), ou les alliages chromino-formeurs dont l'élément de base est le Fer (Fe).

3. Procédé selon la revendication 1 ou 2, **caractérisé en ce que** plusieurs points de soudure (S) sont réalisés, notamment au moins quatre, voire au moins huit, en étant répartis régulièrement en périphérie de la couche de revêtement (GN), étant notamment présents aux angles de la couche de revêtement (GN).

4. Procédé selon l'une quelconque des revendications précédentes, **caractérisé en ce qu'**il comporte l'étape de dépôt d'une couche en verre (V) sur la couche de revêtement (GN) avant l'étape de dépôt de colle.

5. Procédé selon l'une quelconque des revendications précédentes, **caractérisé en ce que**, chaque interconnecteur (5) présentant deux faces planes principales, une deuxième face (P2) des faces planes principales comprend une couche de revêtement épaisse en céramique, formant une couche de contact avec une cellule électrochimique (1), le matériau en céramique étant notamment choisi parmi un lanthanite dopé au strontium de formule La₁₋ₓSrₓMO₃ avec M (métaux de transition) = Nickel (Ni), Fer (Fe), Cobalt (Co), Manganèse (Mn), Chrome(Cr), seul ou en mélange, ou des matériaux de structure lamellaire tels que les nickelâtes de lanthanide de formule Ln₂NiO₄ (Ln = Lanthane (La), Néodyme (Nd), Praséodyme (Pr)), ou un autre oxyde pérovskite conducteur électrique.

6. Procédé selon l'une quelconque des revendications précédentes, **caractérisé en ce que** chaque interconnecteur (5) est formé par l'assemblage d'au moins trois plaques (21, 22, 23) allongées selon un premier axe de symétrie (X) et un deuxième axe de symétrie (Y) orthogonaux entre eux, une plaque centrale (22) étant intercalée entre une première plaque d'extrémité (21) et une deuxième plaque d'extrémité (23).

## Patentansprüche

1. Verfahren zum Herstellen eines Stapels (20) mit hochtemperaturbetriebenen Festoxiden vom Typ SOEC/SOFC, der eine Vielzahl von elektrochemischen Zellen (1), die jeweils aus einer Kathode, einer Anode und einem zwischen der Kathode und der Anode eingefügten Elektrolyten gebildet sind, und eine Vielzahl von metallischen Zwischenverbindern (5) umfasst, die jeweils zwischen zwei benachbarten elektrochemischen Zellen (1) angeordnet sind,
wobei jeder Zwischenverbinder (5) zwei ebene Hauptseiten aufweist, wobei eine erste Seite (P1) der zwei ebenen Hauptseiten eine metallische Beschichtungsschicht (GN) in Form eines Gitters umfasst, die eine Kontaktschicht mit einer elektrochemischen Zelle (1) bildet,
wobei das Verfahren den Schritt des Punktschweißens (S) der metallischen Beschichtungsschicht (GN) auf der ersten Seite (P1) des Zwischenverbinders (5) umfasst, um dessen Befestigung zu ermöglichen,
und den Schritt des Abscheidens eines Klebstoffs an dem Rand der Beschichtungsschicht (GN), außerhalb des aktiven Bereichs und in Abstand von den Gaszufuhren, der dazu bestimmt ist, die elektrochemische Zelle (1) zu befestigen, wobei der Klebstoff zwischen 5 Masse-% und 50 Masse-% Polyvinylbutyral (PVB), zwischen 5 Masse-% und 50 Masse-% Terpineol und zwischen 5 Masse-% und 95 Masse-% Ethanol umfasst.

2. Verfahren nach Anspruch 1, **dadurch gekennzeichnet, dass** das metallische Material der Beschichtungsschicht (GN) ausgewählt ist aus Nickel (Ni) und seinen Legierungen, wobei die Beschichtungsschicht insbesondere in Form eines Nickelgitters (GN) oder chrombildender Legierungen, deren Basiselement Eisen (Fe) ist, vorliegt.

3. Verfahren nach Anspruch 1 oder 2, **dadurch gekennzeichnet, dass** mehrere Schweißpunkte (S), insbesondere mindestens vier, oder sogar mindestens acht, hergestellt werden, die gleichmäßig an dem Rand der Beschichtungsschicht (GN) verteilt und insbesondere an den Ecken der Beschichtungsschicht (GN) vorhanden sind.

4. Verfahren nach einem der vorstehenden Ansprüche, **dadurch gekennzeichnet, dass** es vor dem Schritt des Abscheidens des Klebstoffs den Schritt des Abscheidens einer Glasschicht (V) auf der Beschichtungsschicht (GN) umfasst.

5. Verfahren nach einem der vorstehenden Ansprüche, **dadurch gekennzeichnet, dass** wenn jeder Zwischenverbinder (5) zwei ebene Hauptseiten aufweist, eine zweite Seite (P2) der ebenen Hauptseiten eine dicke keramische Beschichtungsschicht umfasst, die eine Kontaktschicht mit einer elektrochemischen Zelle (1) bildet, wobei das keramische Material insbesondere ausgewählt ist aus einem mit Strontium dotierten Lanthanit der Formel La₁₋ₓSrₓMO₃ mit M (Übergangsmetalle) = Nickel (Ni), Eisen (Fe), Kobalt (Co), Mangan (Mn), Chrom (Cr), allein oder in dem Gemisch, oder Materialien mit Lamellenstruktur wie etwa Lanthanid-Nickelate der Formel Ln₂NiO₄ (Ln = Lanthan (La), Neodym (Nd), Praseodym (Pr)) oder einem anderen elektrisch leitenden Perovskitoxid.

6. Verfahren nach einem der vorstehenden Ansprüche, **dadurch gekennzeichnet, dass** jeder Zwischenverbinder (5) durch den Zusammenbau von mindestens drei Platten (21, 22, 23) gebildet wird, die sich entlang einer ersten Symmetrieachse (X) und einer zweiten Symmetrieachse (Y) erstrecken, welche zueinander orthogonal sind, wobei eine mittlere Platte (22) zwischen einer ersten Endplatte (21) und einer zweiten Endplatte (23) eingefügt ist.

## Claims

1. A method for making a SOEC/SOFC-type solid oxide stack (20) operating at high temperature, including a plurality of electrochemical cells (1) each formed of a cathode, an anode and an electrolyte interposed between the cathode and the anode, and a plurality of metal interconnectors (5) each arranged between two adjacent electrochemical cells (1),
each interconnector (5) having two main planar faces, a first face (P1) of the two main planar faces comprising a metal coating layer (GN) in the form of a grid forming a contact layer with an electrochemical cell (1),
the method including the step of spot-welding (S) the metal coating layer (GN) on the first face (P1) of the interconnector (5) to enable fastening thereof,
and the step of depositing a glue at the periphery of the coating layer (GN), off the active area and at a distance from the gas supplies, intended to fasten the electrochemical cell (1), the glue comprising between 5% and 50% by weight of polyvinyl butyral (PVB), between 5% and 50% by weight of terpineol and between 5% and 95% by weight of ethanol.

2. The method according to claim 1, **characterised in that** the metallic material of the coating layer (GN) is selected from among nickel (Ni) and its alloys, the coating layer being in particular in the form of a Nickel grid (GN), or the chromia-forming alloys whose base element is Iron (Fe).

3. The method according to claim 1 or 2, **characterised in that** several welding spots (S) are made, in particular at least four, and possibly at least eight, by being evenly distributed at the periphery of the coating layer (GN), being in particular present at the angles of the coating layer (GN).

4. The method according to any one of the preceding claims, **characterised in that** it includes the step of depositing a glass layer (V) over the coating layer (GN) before the glue deposition step.

5. The method according to any one of the preceding claims, **characterised in that**, each interconnector (5) having two main planar faces, a second face (P2) of the main planar faces comprises a thick ceramic coating layer, forming a contact layer with an electrochemical cell (1), the ceramic material being selected in particular from a strontium-doped lanthanide of formula La₁₋ₓSrₓMO₃ with M (transition metals) = Nickel (Ni), Iron (Fe), Cobalt (Co), Manganese (Mn), Chromium (Cr), alone or as a mixture, or lamellar structure materials such as lanthanide nickelates of formula Ln₂NiO₄ (Ln = Lanthanum (La), Neodymium (Nd), Praseodymium (Pr)), or another electrically-conductive perovskite oxide.

6. The method according to any one of the preceding claims, **characterised in that** each interconnector (5) is formed by the assembly of at least three plates (21, 22, 23) elongated according to a first axis of symmetry (X) and a second axis of symmetry (Y) orthogonal to each other, a central plate (22) being interposed between a first end plate (21) and a second end plate (23).
